# FASCICULE DE BREVET EUROPEEN

(11) **EP 4 314 163 B1**
(45) Date de publication et mention de la délivrance du brevet: **06.08.2025**
(21) Numéro de dépôt: 22718748.1
(22) Date de dépôt: 01.04.2022
(51) Int. Cl.: C08L 95/00

(54) **LIANTS BITUMINEUX OFFRANT UNE RESISTANCE ACCRUE AUX AGRESSIONS CHIMIQUES**
BITUMINÖSE BINDEMITTEL MIT ERHÖHTER BESTÄNDIGKEIT GEGEN CHEMISCHE ANGRIFFE
BITUMINOUS BINDERS OFFERING INCREASED RESISTANCE TO CHEMICAL ATTACK

(30) Priorité: 02.04.2021 FR 2103456
(43) Date de publication de la demande: 07.02.2024
(73) Titulaire: Vinci Construction, 92000 Nanterre (FR); SK Geo Centric Co., Ltd., Jongno-gu Seoul 03161 (KR)
(72) Inventeur: GAZEAU, Sabine, 33127 SAINT JEAN D'ILLAC (FR); DECAMPS, Jacques-Antoine, 33700 MERIGNAC (FR); DELFOSSE, Frédéric, 33600 PESSAC (FR); JACQUES, Guillaume, 76300 SOTTEVILLE LES ROUEN (FR); BOUILLOUX, Alain, 27300 SAINT LEGER DE ROTES (FR)
(74) Mandataire: Regimbeau
(86) Numéro de dépôt international: PCT/FR2022/050618
(87) Numéro de publication internationale: WO 2022/208035

(56) Documents cités:
- EP-A1- 1 700 887
- FR-A1- 3 022 545
- LI PEI ET AL: "Chain structure comparison of two low density polyethylene resins fractionated by temperature rising elution fractionation and thermal fractionation", JOURNAL OF POLYMER RESEARCH, SPRINGER NETHERLANDS, DORDRECHT, vol. 26, no. 3, 4 February 2019 (2019-02-04), pages 1 - 13, XP036723647, ISSN: 1022-9760, [retrieved on 20190204], DOI: 10.1007/S10965-019-1715-7

## Description

### DOMAINE DE L'INVENTION

La présente invention concerne le domaine des liants bitumineux utiles en construction routière et/ou génie civil, tout particulièrement utiles pour la préparation de produits bitumineux, offrant une résistance accrue aux agressions chimiques, en particulier aux agressions par des hydrocarbures.

### ARRIERE PLAN TECHNOLOGIQUE

Compte-tenu de la nature même de leur liant, les enrobés bitumineux traditionnels, c'est-à-dire des enrobés préparés à partir de bitume en tant que liant, résistent mal au contact des hydrocarbures et de certains produits chimiques agressifs du type produits pétroliers (kérosène, fuel, gazole, essence...), déchets agricoles (lisier, jus provenant de plateforme de méthanisation...). Leur usage apparaît donc inadapté dans des zones soumises à des agressions chimiques intenses et continuelles.

Différentes solutions ont été proposées pour améliorer la résistance des enrobés bitumineux aux agressions. Ainsi, il a été proposé d'ajouter des additifs aux liants bitumineux pour améliorer leur résistance aux composés chimiques et carburants. Des exemples d'additifs incluent des copolymères d'éthylène et d'acétate de vinyle (EVA), des copolymères d'éthylène et d'acrylate de butyle (EBA), des copolymères élastomères de type styrène-butadiène-styrène (SBS), styrène-éthylène-butylène-styrène (SEBS) ou styrène-butadiène (SBR) en mélange physique ou éventuellement réticulés in-situ, des terpolymères comprenant des monomères éthylène, des monomères portant une fonction époxyde (ex : glycidyl acrylate, glycidyl methacrylate, or glycidyl vinyl ether) et autres monomères tels que des alkyl acrylates, alkyl méthacrylates, vinyl esters et alkyl vinyl éthers. Il a également été proposé d'ajouter aux liants bitumineux des cires d'hydrocarbures, des cires végétales (comprenant entre 30 et 115 atomes de carbone) mais également des déchets plastiques à base de polyéthylène et/ou de polypropylène. Il a également été proposé de modifier un liant bitumineux par addition d'un copolymère d'éthylène et d'acrylate de méthyle (EP1 700 887), tels que les copolymères Elvaloy AM^{®} et Elvaloy AC^{®}1125 commercialisé par Dow Inc. Ces copolymères, de par leur procédé de polymérisation présentent une hétérogénéité de distribution des monomères faible, l'hétérogénéité de distribution des monomères des copolymères obtenus par polymérisation en réacteur tubulaire (Elvaloy AC^{®}1125) étant toute fois supérieure à celle des copolymères obtenus en autoclave.

La demande FR3022545 décrit l'utilisation du copolymère éthylène méthyle acrylate Lotryl^{®}20MA08T dans des compositions améliorant les propriétés mécaniques, physiques et chimiques d'agents d'encapsulation pour les cellules photovoltaïques. L'utilisation d'un tel copolymère dans un liant bitumineux n'a jamais été décrite.

Néanmoins, un besoin demeure pour la mise à disposition de nouvelles solutions permettant d'augmenter significativement la résistance des liants bitumineux et des produits bitumineux préparés à partir de tels liants, aux agressions chimiques, en particulier aux agressions par les hydrocarbures.

### BREVE DESCRIPTION DE L'INVENTION

La présente invention porte sur l'utilisation d'un copolymère d'éthylène et d'acrylate d'alkyle comprenant au moins 30% en poids de fraction non-fondue à 83°C et au moins 3% en poids de fraction non fondue à 103°C tels que mesurés par calorimétrie différentielle à balayage par succession de cycles de nucléation-recuit (DSC SSA) pour augmenter la résistance des liants bitumineux aux agressions chimiques, de préférence aux agressions par les hydrocarbures.

La présente invention porte également sur un liant bitumineux comprenant du bitume et au moins un copolymère d'éthylène et d'acrylate d'alkyle comprenant au moins 30% en poids de fraction non-fondue à 83°C et au moins 3% en poids de fraction non fondue à 103°C tels que mesurés par calorimétrie différentielle à balayage par succession de cycles de nucléation-recuit et sur leur utilisation pour augmenter la résistance des produits bitumineux préparés à partir du liant bitumineux aux agressions chimiques, de préférence aux agressions par les hydrocarbures.

La présente invention porte également sur un produit bitumineux comprenant un liant bitumineux selon la présente invention et éventuellement des particules solides et sur leur procédé de préparation.

D'autres aspects de l'invention sont tels que décrits ci-dessous et dans les revendications.

### FIGURES

Figure 1 : méthode DSC SSA (Successive Self-Nucleation/Annealing) -protocole thermique.
Figure 2 : méthode DSC SSA (Successive Self-Nucleation/Annealing) - exemple de courbe obtenue

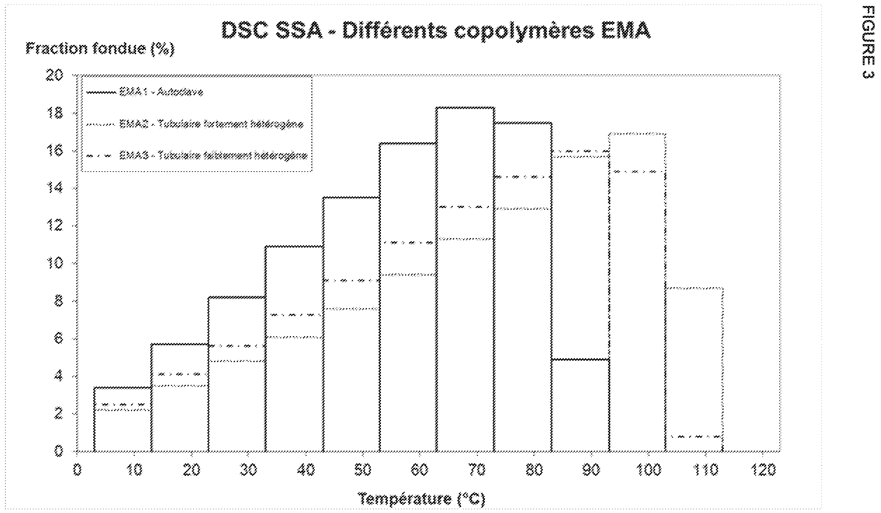

Figure 3 : représentation de la fraction fondue de différents copolymères pour chaque gamme de températures observée.

### DESCRIPTION DETAILLEE DE L'INVENTION

Il a été mis en évidence que des copolymères d'éthylène et d'acrylate d'alkyle préparés par copolymérisation en réacteur tubulaire, avec une introduction particulière des monomères au sein du réacteur tubulaire - *conduisant à l'obtention de copolymères présentant une « forte » hétérogénéité-* augmentent de manière significative la résistance des liants bitumineux et des produits bitumineux préparés à partir de tels liants aux agressions chimiques (ex. produits pétroliers tels que le kérosène, le fuel, le gazole ou l'essence, composés d'origine végétale, déchets agricoles tels que le lisier, les jus provenant de plateforme de méthanisation), tout particulièrement aux agressions par les hydrocarbures.

Ainsi, la présente invention porte sur l'utilisation d'un copolymère d'éthylène et d'acrylate d'alkyle comprenant au moins 30% en poids de fraction non-fondue à 83°C et au moins 3% en poids de fraction non fondue à 103°C tels que mesurés par calorimétrie différentielle à balayage par succession de cycles de nucléation-recuit, méthode communément désignée par l'acronyme bien connu DSC SSA, pour augmenter la résistance des liants bitumineux aux agressions chimiques, en particulier aux agressions par les hydrocarbures. Dans certains modes de réalisation, le copolymère d'éthylène et d'acrylate d'alkyle comprend au moins 32% en poids de fraction non-fondue à 83°C et au moins 3% en poids de fraction non fondue à 103°C tels que mesurés par DSC SSA. Dans d'autres modes de réalisation, le copolymère d'éthylène et d'acrylate d'alkyle comprend au moins 35% en poids de fraction non-fondue à 83°C et au moins 5% en poids de fraction non fondue à 103°C tels que mesurés par DSC SSA. Les pourcentages en poids sont exprimés par rapport au poids total du copolymère d'éthylène et d'acrylate d'alkyle.

La méthode DSC SSA est telle que décrite dans la section « EXEMPLES ».

La présente invention porte également sur l'utilisation d'un liant bitumineux comprenant un tel copolymère pour augmenter la résistance des produits bitumineux aux agressions chimiques, en particulier aux agressions par les hydrocarbures. La présente invention porte également sur un procédé de préparation d'un produit bitumineux comprenant l'utilisation d'un liant bitumineux selon la présente invention.

La résistance des produits bitumineux aux agressions chimiques, en particulier aux agressions par les hydrocarbures, a été déterminée par la méthode NF EN 12697-43 (2014) décrite dans la section « EXEMPLES ».

La présente invention porte également sur un liant bitumineux comprenant un tel copolymère ainsi que sur un produit bitumineux préparé à partir d'un tel liant.

D'autres aspects de l'invention sont tels que décrits ci-dessous.

### Copolymères d'éthylène et d'acrylate d'alkyle

Les pourcentages des fractions non-fondues à 83°C et 103°C d'un copolymère d'éthylène et d'acrylate d'alkyle traduisent le degré d'hétérogénéité du copolymère. Ainsi, un copolymère d'éthylène et d'acrylate d'alkyle comprenant au moins 30% en poids de fraction non-fondue à 83°C, par exemple de 30% à 50% en poids de fraction non-fondue à 83°C, et au moins 3% en poids de fraction non fondue à 103°C, par exemple de 3% en poids à 15% en poids de fraction non fondue à 103°C, tels que mesurés par DSC SSA présente une hétérogénéité qui peut être qualifiée de « forte ». Il a été mis en évidence que de tels copolymères améliorent la résistance des liants bitumineux et des produits bitumineux préparés à partir de ces liants aux agressions chimiques, en particulier aux agressions par les hydrocarbures.

Un copolymère d'éthylène et d'acrylate d'alkyle comprenant au moins 30% en poids de fraction non-fondue à 83°C et au moins 3% en poids de fraction non fondue à 103°C tels que mesurés par DSC SSA peut être préparé par un procédé de copolymérisation radicalaire continue à haute pression dans un réacteur tubulaire (dit « procédé de copolymérisation tubulaire »). Les procédés de copolymérisation tubulaire sont bien connus de l'homme du métier. Par exemple, les copolymères d'éthylène et d'acrylate d'alkyle utiles dans le cadre de la présente invention peuvent être préparés par un procédé tel que décrit dans WO2003/051630. Dans un réacteur tubulaire, les conséquences inhérentes d'une cinétique de réaction différente des monomères d'éthylène et d'acrylate d'alkyle peuvent être atténuées par l'introduction des monomères le long du trajet d'écoulement de la réaction à l'intérieur du réacteur tubulaire de manière à assurer une distribution plus aléatoire des monomères et limiter l'hétérogénéité des copolymères obtenus. Les réacteurs tubulaires se découpent ainsi souvent en plusieurs sections avec des points d'injections secondaires de monomères. Par exemple, le réacteur décrit dans WO2003/051630 comprend une ouverture d'alimentation en entrée de tube (« ouverture frontale ») et une ouverture d'alimentation supplémentaire dans l'espace de réaction tubulaire (« ouverture latérale ») en aval de l'ouverture d'alimentation. Un copolymère d'éthylène et d'acrylate d'alkyle comprenant au moins 30% en poids de fraction non-fondue à 83°C et au moins 3% en poids de fraction non fondue à 103°C tels que mesurés par DSC SSA peut être obtenu en introduisant préférablement plus de 80% en poids du monomère d'acrylate d'alkyle, par rapport au poids total du monomère d'acrylate d'alkyle, plus préférablement 100% en poids du monomère d'acrylate d'alkyle en entrée de tube, c'est-à-dire par l'ouverture frontale. Le monomère d'éthylène est introduit dans le réacteur par l'ouverture frontale. Les copolymères d'éthylène et d'acrylate d'alkyle préparés par un procédé de copolymérisation tubulaire dans lequel l'introduction du monomère d'acrylate d'alkyle ne respecte pas ces proportions présentent un degré d'hétérogénéité inférieur et s'avèrent apporter une résistance moindre aux agressions chimiques, en particulier aux agressions par les hydrocarbures.

De préférence, la copolymérisation est réalisée à une température allant de 190 à 260°C, de préférence allant de 200 à 250°C, encore plus préférentiellement allant de 210 à 240°C.

De préférence, la copolymérisation est réalisée à une pression allant de 1500 à 3000 bars, de préférence allant de 1700 à 2800 bars, encore plus préférentiellement allant de 2000 à 2500 bars.

Les copolymères d'éthylène et d'acrylate d'alkyle utiles dans le cadre de la présente invention comprennent typiquement de 1 à 40% en poids, préférablement de 15 à 35% en poids, encore plus préférablement de 19 à 30% en poids d'acrylate d'alkyle par rapport au poids total du copolymère.

L'acrylate d'alkyle comprend typiquement des groupements alkyles contenant de 1 à 8 atomes de carbone. Des exemples d'acrylate d'alkyle utiles dans le cadre de la présente invention incluent l'acrylate de méthyle, l'acrylate d'éthyle, l'acrylate de butyle ou leurs mélanges. De préférence, il s'agit de l'acrylate de méthyle.

Ainsi, les copolymères utiles dans le cadre de la présente invention sont de préférence des copolymères d'éthylène et d'acrylate de méthyle.

Les copolymères utiles dans le cadre de la présente invention présentent typiquement un indice de fluidité à chaud (MFI) tel que mesuré selon la méthode ISO1133-1 de 2011 (190°C/2,16Kg) variant de 0,5 à 500 g/10min, de préférence variant de 0,5 à 40 g/10 min, encore plus préférablement de 1 à 10 g/10 min. La méthode ISO 1133 (2011) est telle que décrite dans la section « EXEMPLES ».

Des exemples de copolymères d'éthylène et d'acrylate d'alkyle comprenant au moins 30% en poids de fraction non-fondue à 83°C et au moins 3% en poids de fraction non fondue à 103°C tels que mesurés par DSC SSA incluent les copolymères d'éthylène et d'acrylate de méthyle commercialisés par SK Functional Polymer sous les références LOTRYL^{®}24MA02T, LOTRYL^{®}24MA07T et LOTRYL^{®}20MA08T.

### Liants bitumineux

Les liants bitumineux de la présente invention comprennent du bitume et au moins un copolymère d'éthylène et d'acrylate d'alkyle tel que décrit ci-dessus. De tels liants bitumineux permettent d'augmenter la résistance d'un produit bitumineux aux agressions chimiques, en particulier aux agressions par les hydrocarbures.

Généralement, les liants bitumineux de la présente invention comprennent au moins 3% en poids, voire au moins 5% en poids, d'un copolymère d'éthylène et d'acrylate d'alkyle tel que décrit ci-dessus ou d'un mélange de ces copolymères d'éthylène et d'acrylate d'alkyle, par rapport au poids total du liant bitumineux. Dans certains modes de réalisation, les liants bitumineux de la présente invention comprennent de 3% à 10% en poids, préférentiellement de 5% à 8% en poids d'un copolymère d'éthylène et d'acrylate d'alkyle ou d'un mélange de copolymères d'éthylène et d'acrylate d'alkyle, par rapport au poids total du liant bitumineux. La concentration du copolymère d'éthylène et d'acrylate d'alkyle ou du mélange de copolymères d'éthylène et d'acrylate d'alkyle sera typiquement choisie de manière à obtenir un liant bitumineux présentant une matrice continue polymère, telle qu'observée par microscopie optique de fluorescence UV.

Le bitume utile à la préparation des liants bitumineux est typiquement un bitume issu du raffinage de pétrole(s) brut(s), par exemple un bitume de grade allant de 20/30 à 160/220, plus spécifiquement un bitume de grade allant de 70/100 à 50/70. Le bitume utile à la préparation des liants bitumineux respecte typiquement la norme EN 12591 (12/2009).

Des additifs typiquement utilisés en technique routière, de nature polymérique ou non, peuvent être ajoutés au bitume pour en modifier les propriétés. Des exemples d'additifs incluent de manière non limitative les plastifiants (composés ayant pour effet de ramollir le bitume), les durcisseurs (composés ayant pour effet de durcir le bitume), les promoteurs d'adhésion, les additifs de maniabilité, les émulsifiants, les viscosifiants et les cires végétales ou d'origine pétrolière. Ces additifs seront typiquement choisis de manière à obtenir des bitumes additivés respectant la norme EN 12591 (12/2009).

Les liants bitumineux de la présente invention peuvent être préparés selon des méthodes conventionnelles, par exemple par chauffage du bitume à une température allant de 140 à 200°C, de préférence allant de 150 à 180°C, et addition d'au moins un copolymère d'éthylène et d'acrylate d'alkyle tel que décrit ci-dessus.

Les liants bitumineux peuvent être des liants prêts à l'emploi, c'est-à-dire des liants bitumineux obtenus par mélange des différents constituants en usine. La préparation de liants prêts à l'emploi permet une bonne compatibilisation des constituants du mélange et un gonflement du copolymère. De manière alternative, le copolymère peut être ajouté lors de la fabrication du produit bitumineux, par exemple directement dans le malaxeur d'une usine d'enrobés.

Les liants bitumineux peuvent être sous forme anhydre, sous forme d'émulsion ou de mousse. Lorsque le liant bitumineux est sous forme d'émulsion, le liant bitumineux est dispersé dans une phase continue, typiquement une phase aqueuse, par exemple de l'eau. Un agent tensioactif peut être ajouté à l'émulsion afin de la stabiliser. L'agent tensioactif peut être chargé positivement, chargé négativement, amphotère ou non-ionique. L'agent tensioactif peut être d'origine pétrolière, végétale, animale et leur mélanges (par exemple l'agent tensioactif peut être d'origine végétale et pétrolière). L'agent tensioactif peut être un savon alcalin d'acides gras : sels de sodium ou de potassium d'un acide organique (résine par exemple). L'émulsion est alors anionique. L'agent tensioactif peut être un savon acide, lequel est généralement obtenu par action de l'acide chlorhydrique ou de l'acide phosphorique sur une ou deux amines. L'émulsion est alors cationique. Parmi les tensioactifs pertinents en application routière, peuvent être cités les tensioactifs commercialisés par Nouryon (Redicote^{®} E9, Redicote^{®} EM 44, Redicote^{®} EM 76), les tensioactifs commercialisés par Arkema (Dinoram^{®} S, Polyram^{®} S, Polyram^{®} L 80), les tensioactifs commercialisés par INGEVITY (Indulin^{®} R33, Indulin^{®} R66, Indulin^{®} W5). Ces tensioactifs peuvent être utilisés seuls ou en mélanges.

Lorsque le liant bitumineux est sous forme de mousse, la mousse est typiquement obtenue par un procédé d'injection dans l'arrivée du liant bitumineux d'une quantité d'eau, et éventuellement d'air, l'eau étant pure ou pouvant comprendre des additifs permettant de modifier les propriétés d'adhésivité voire rhéologiques du liant bitumineux. Les liants bitumineux sont de préférence sous forme anhydre.

Dans certains modes de réalisation, le liant bitumineux est dépourvu de tout autre composé, de nature polymérique ou non, apportant une résistance aux agressions chimiques. Dans certains modes de réalisation, il est tout particulièrement dépourvu d'additifs tels que des copolymères d'éthylène et d'acétate de vinyle (EVA), des copolymères élastomères de type styrène-butadiène-styrène (SBS), styrène-éthylène-butylène-styrène (SEBS) ou styrène-butadiène (SBR), des terpolymères comprenant des monomères éthylène, des monomères portant une fonction époxyde (ex : glycidyl acrylate, glycidyl methacrylate, or glycidyl vinyl ether) et autres monomères tels que des alkyl acrylates, alkyl méthacrylates, vinyl esters et alkyl vinyl éthers. Il est de préférence dépourvu de tout polymère ou copolymère autre que le copolymère d'éthylène et d'acrylate d'alkyle utile dans le cadre de la présente invention.

### Produits bitumineux

Un « produit bitumineux » désigne un produit comprenant un liant bitumineux et très généralement des particules solides, en particulier des particules solides minérales.

Des exemples de produits bitumineux pouvant être dépourvus de particules solides incluent les membranes bitumineuses. Les membranes bitumineuses sont des nappes de matériau filamenteux ou fibreux (géotextiles) imprégnés d'un liant bitumineux. Elles sont principalement destinées à assurer une étanchéité. Les membranes bitumineuses peuvent également comprendre des particules solides, en particulier des particules solides minérales, telles que des gravillons, du sable et/ou des fines. Des exemples de telles membranes bitumineuses incluent les membranes gravillonnées.

Le terme "particules solides ", désigne toutes particules solides utilisables pour la réalisation de produits bitumineux, notamment pour la construction routière. Des exemples de particules solides incluent les particules solides minérales telles que les granulats minéraux naturels (gravillons, sable, fines), par exemple issus de carrière ou de gravière, les produits de recyclage tels que les agrégats d'enrobés, par exemple résultant du recyclage des matériaux récupérés lors de la réfection des routes ou des surplus d'usines d'enrobés, les rebuts de fabrication, les « shingles » (provenant du recyclage des membranes de toitures), les granulats provenant du recyclage de matériaux routiers y compris les bétons, les laitiers en particulier les scories, les schistes en particulier la bauxite ou le corindon, les poudrettes de caoutchouc par exemple provenant du recyclage des pneus, les granulats artificiels de toute origine et les granulats provenant par exemple des mâchefers d'incinération des ordures ménagères (MIOM), ainsi que leurs mélanges en toutes proportions.

Les particules solides, en particulier les particules solides minérales, par exemple les granulats minéraux naturels, comprennent typiquement des éléments inférieurs à 0,063 mm (filler ou fines), du sable dont les éléments sont compris entre 0,063 mm et 2 mm et des gravillons ou granulats, dont les éléments ont des dimensions comprises entre 2 mm et 6 mm et supérieures à 6 mm.

La taille des particules solides, en particulier des particules solides minérales, par exemple les granulats minéraux, est mesurée par les essais décrits dans la norme NF EN 933-2 (07/2020).

Par « agrégats d'enrobés » sont désignés des fragments d'enrobés (mélange de granulats et de liants bitumineux) provenant de fraisage de couches d'enrobé, de concassage de plaques extraites de chaussées en enrobés, de morceaux de plaques d'enrobés, de déchets d'enrobé ou de surplus de productions d'enrobés (les surplus de productions sont des matériaux enrobés ou partiellement enrobés en centrale résultant des phases transitoires de fabrication). Ces éléments et les autres produits de recyclage peuvent atteindre des dimensions jusqu'à 31,5 mm.

Les « particules solides minérales » sont également désignées par les termes « fraction minérale 0/D ». Cette fraction minérale 0/D peut être séparée en deux granulométries : la fraction minérale 0/d et la fraction minérale d/D. Les éléments les plus fins (la fraction minérale 0/d) sont ceux compris dans la plage comprise entre 0 et un diamètre maximal que l'on peut fixer entre 2 et 6 mm (de 0/2 à 0/6), avantageusement entre 2 et 4 mm. Les autres éléments (diamètre minimal supérieur à 2, 3, 4, 5 ou 6 mm ; et environ jusqu'à 31,5 mm) constituent la fraction minérale d/D.

Les produits bitumineux de la présente invention comprennent généralement des particules solides, en particulier des granulats minéraux naturels, de préférence présentant les spécificités décrites ci-dessus, et un liant bitumineux tel que décrit ci-dessus.

Les produits bitumineux de la présente invention peuvent être des asphaltes coulés, des enrobés à chaud, des enrobés tièdes, des membranes bitumineuses appliquées à chaud ou à froid (ex. membranes préfabriquées, membranes gravillonnées, membranes épaisses anti-fissures et étanches), des matériaux bitumineux coulés à froid ou encore des enduits superficiels. De tels produits bitumineux sont bien connus en technique routière et peuvent être préparés par des techniques conventionnelles. Par exemple, certains des produits bitumineux précédemment cités pourront être préparés selon des méthodes telles que décrites dans WO2011/151387, EP0 384 094, EP 0524031, EP 0781887, EP 0 552 574, FR 2 732 239 ou encore EP 1 668 184.Les produits bitumineux répondent typiquement aux normes EN 13108-6 (12/2006), EN 12970 (12/2000), EN 13108-1 (02/2007), EN 13108-2 (12/2006), EN 13108-3 (12/2006), EN 13108-4 (12/2006), EN 13969 (09/2005), EN 13108-5 (12/2006), EN 13108-7 (12/2006) et EN 13108-9 (10/2016).

De préférence, les produits bitumineux de la présente invention sont des enrobés à chaud ou des enrobés tièdes.

Les enrobés à chaud de la présente invention sont typiquement obtenus par mélange à chaud de particules solides telles que décrites ci-dessus (typiquement un mélange de fine, sable et granulats présentant les spécificités décrites ci-dessus) et d'un liant bitumineux tel que décrit ci-dessus (liant sous forme anhydre), typiquement dans une usine d'enrobés. Les particules solides sont chauffées, en règle générale à une température supérieure à 100°C. Le mélange obtenu est ensuite épandu à une température de mise en œuvre variant typiquement de 100 à 190°C, préférentiellement de 120 à 180°C

Les enrobés tièdes sont des enrobés mis en œuvre à des températures d'environ 30 à 50°C inférieures aux températures mises en œuvre pour des enrobés hydrocarbonés à chaud.

Les enrobés à chaud ou tièdes de l'invention peuvent être fabriqués dans n'importe quelle usine d'enrobés.

La teneur totale en liant bitumineux des enrobés à chaud ou tièdes varie généralement de 4 à 10% en poids, avantageusement de 4,5 à 6,5% en poids par rapport au poids total du produit bitumineux formulé (c'est-à-dire par rapport au poids total du mélange comprenant le liant bitumineux et les particules solides). Cette teneur en liant bitumineux correspond à la quantité de liant introduit en tant que tel (liant d'apport) plus la quantité de liant éventuelle récupérée des agrégats d'enrobés faisant partie de la fraction solide. Les enrobés hydrocarbonés à chaud ou tièdes sont typiquement utilisés pour réaliser de couches et/ou revêtements de construction routière et/ou de génie civil. Ils sont typiquement utilisés pour réaliser des couches de roulement. Les enrobés hydrocarbonés à chaud ou tièdes peuvent être tout particulièrement utilisés pour réaliser des couches de roulement de type bétons bitumineux minces (BBM), bétons bitumineux semi-grenu (BBSG) ou béton bitumineux à module élevé (BBME).

Dans certains modes de réalisation, les produits bitumineux sont des asphaltes coulés. Les asphaltes coulés désignent des produits obtenus par coulage à chaud d'un mélange comprenant un liant bitumineux, des fines, du sable, des gravillons et éventuellement de la poudre d'asphalte naturelle. Dans les asphaltes coulés, les vides interstitiels qui peuvent être présents dans les enrobés sont comblés par du sable, des fines et du bitume. Les asphaltes coulés peuvent être tout particulièrement utilisés pour préparer des revêtements de chaussées, de trottoirs ou autres aménagements urbains ou encore pour préparer des couches d'étanchéité d'ouvrages et bâtiments.

La présente invention porte également sur un procédé de fabrication d'un produit bitumineux, tout particulièrement d'un enrobé à chaud ou tiède, comprenant les étapes suivantes :
(a) chauffage des particules solides, de préférence à une température supérieure à 100°C ;
(b) mise en contact et mélange des particules solides chauffées et d'un liant bitumineux tel que décrit ci-dessus.

De manière alternative, le procédé de fabrication d'un produit bitumineux, tout particulièrement d'un enrobé à chaud ou tiède, peut comprendre les étapes suivantes :
(a) chauffage des particules solides, de préférence à une température supérieure à 100°C ;
(b) mise en contact et mélange des particules solides chauffées, du bitume et d'un copolymère tel que décrit ci-dessus.

La mise en contact des particules solides chauffées, du bitume et d'un copolymère tel que décrit ci-dessus peut être réalisée de différentes manières. Par exemple, elle peut comprendre les étapes suivantes :
(a) Ajout du copolymère au bitume ;
(b) Ajout du bitume auquel a été ajouté le copolymère aux particules solides.

La mise en contact des particules solides chauffées, du bitume et d'un copolymère tel que décrit ci-dessus peut également être réalisée par ajout concomitant du copolymère et du bitume aux particules solides.

La mise en contact des particules solides chauffées, du bitume et d'un copolymère tel que décrit ci-dessus peut comprendre les étapes suivantes :
(a) Ajout du bitume aux particules solides ;
(b) Ajout du copolymère aux particules solides auxquelles a été ajouté le bitume.

La mise en contact peut également comprendre une combinaison de ces différentes variantes.

Les produits bitumineux de la présente invention, en particulier les enrobés à chaud ou tièdes de la présente invention présentent une résistance accrue aux solvants des bitumes, en particulier une résistance accrue aux hydrocarbures. Ainsi, les produits bitumineux de la présente invention peuvent être tout particulièrement utiles pour réaliser des couches de roulement, en particulier sur des sites exposés aux hydrocarbures (couloirs et arrêts de bus, stationnements, entrepôts, sites industriels, voies poids lourds, péages d'autoroute, installations portuaires et aéroportuaires).

Par ailleurs, les produits bitumineux de la présente invention répondent aux spécificités techniques normatives requises dans le domaine.

Les exemples qui suivent sont donnés à titre illustratif, mais ne doivent en aucun cas être considérés comme limitatifs de la présente invention.

### EXEMPLES

### 1. Méthodes

### 1.1. Résistance aux solvants du bitume

La résistance des enrobés à usage routier aux produits « solvants du bitume » a été évaluée selon des essais réalisés en accordance avec la méthode décrite dans la norme NF EN 12697-43 (04/2014) (méthodes d'essai pour mélange hydrocarboné à chaud - Partie 43: Résistance aux carburants). Ces essais permettent la détermination de trois coefficients :
Coefficient A : perte de matériau après immersion (charge chimique)
Coefficient B : perte de matériau après l'essai de brossage (charge mécanique)
Coefficient C : perte combinée de matériau après l'immersion et l'essai de brossage

Le coefficient A traduit la résistance de l'enrobé à l'immersion dans un solvant, par exemple le kérosène (simulation de l'attaque de l'agent chimique dès le déversement de ce dernier).

Le coefficient B traduit la résistance de l'enrobé après lavage à l'eau, séchage et brossage mécanique de la face immergée (mesure de la performance résiduelle de l'enrobé après nettoyage // simulation de la dégradation dans le temps sous sollicitation du trafic).

Le coefficient C traduit la valeur de la perte de masse combinée.

### 1.2. Hétérogénéité des copolymères

La méthode DSC SSA (Successive Self-Nucleation/Annealing) est une méthode de caractérisation thermique des polymères qui consiste en la succession de cycles de nucléation et de recuit. Cette méthode a été appliquée aux copolymères d'éthylène et d'acrylate d'alkyle, afin de comparer leur répartition en comonomères.

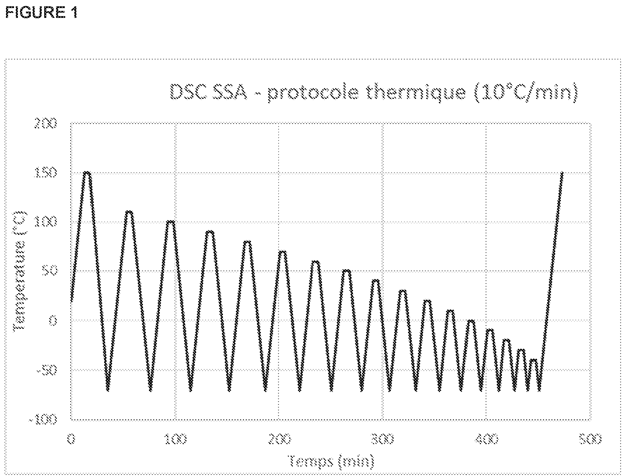

Le protocole thermique appliqué est présenté sur la figure 1. Il consiste en une première chauffe de l'échantillon à 150°C, puis une succession de refroidissements à -70°C suivi de chauffes à respectivement 110°C, 100°C, 90°C, ... jusqu'à -40°C selon le protocole thermique de la figure 1. Après le dernier cycle de chauffe jusqu'à -40°C, une dernière étape de refroidissement à -70°C est effectuée suivie d'une dernière chauffe à 150°C. Toutes les étapes de chauffe et refroidissement sont effectuée à une vitesse de chauffe et/ou refroidissement de 10°C/min.

Après chaque chauffe, un palier isotherme de 5 minutes est réalisé.

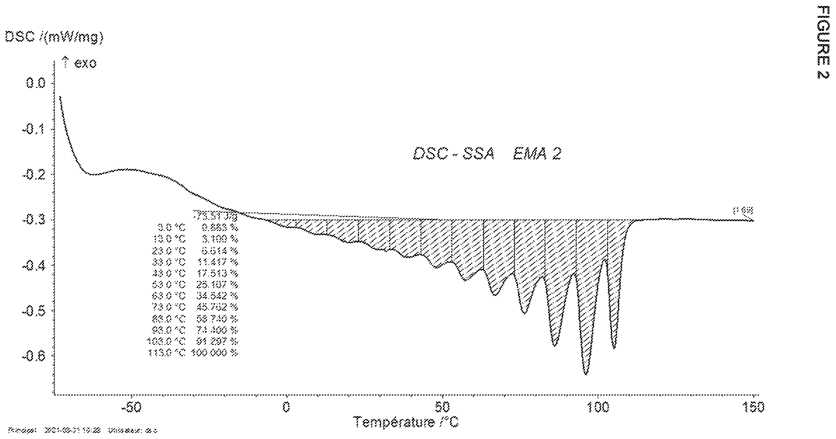

Après l'essai, on obtient un graphique représentant le flux de chaleur en fonction de la température. Un exemple de graphique obtenu est présenté sur la figure 2. Ce graphique peut être intégré pour définir les fractions fondues de l'échantillon à températures données.

Cette méthode est décrite plus en détails dans la publication « Application of Successive Self-Nucleation and Annealing (SSA) to Polymer Characterization » de Arnal et Al., parue au Journal of Thermal Analysis and Calorimetry de Janvier 2000.

### 1.3. Indice de fluidité

L'indice de fluidité est mesuré selon la méthode décrite dans la norme ISO1133-1 (2011). Les copolymères sont évalués à une température de 190°C et sous une charge de 2,16kg.

### 2. Exemples

Dans les exemples suivants, les copolymères d'éthylène et d'acrylate d'alkyle présentés au tableau 1 ci-dessous ont été évalués.

**Tableau 1 : Copolymères d'éthylène et d'acrylate d'alkyle**

| Copolymère | EMA1 | EMA2 | EMA3 | EMA4 | EMA5 |
|---|---|---|---|---|---|
| Référence | Lotryl^{®} 20MA08¹ | Lotryl^{®} 20MA08T¹ | Elvaloy^{®} AC 1820² | Elvaloy^{®} AC 1125² | Lotryl^{®} 24MA07T¹ |
| Préparation | Autoclave | Tubulaire | Tubulaire | Tubulaire | Tubulaire |
| Acrylate d'alkyle | Acrylate de méthyle | | | | |
| % en poids en acrylate d'alkyle | 20% | 20% | 20% | 24% | 24% |
| MFI (190°C / 2.16kg) | 8g/10min | 8g/10min | 8g/10min | 0,5g/10min | 7g/10min |
| Température de fusion | 80°C | 97°C | 92°C | 90°C | 98°C |

| | | | | | |
|---|---|---|---|---|---|
| ¹ fourni par SK Functional Polymer ; ² fourni par Dow | | | | | |

### 2.1. Détermination du degré d'hétérogénéité des copolymères évalués

L'hétérogénéité des copolymères d'éthylène et d'acrylate d'alkyle présentés au tableau 1 a été déterminée par une mesure calorimétrique DSC SSA (Differential Scanning Calorimetry - Successive Self-nucleation / Annealing) telle que décrite ci-dessus.

La méthode analytique DSC SSA permet un fractionnement thermique du copolymère analysé. Il en résulte une représentation de la fraction fondue du copolymère pour chaque gamme de températures observée. Ainsi, l'hétérogénéité du copolymère étudié résultera de fractions de copolymère fondues différentes à températures données. Cette technique permet la différenciation des copolymères selon leur procédé de synthèse (autoclave ou tubulaire), mais permet également de démontrer des différences entre des copolymères obtenus par différents procédés tubulaires.

Les résultats obtenus sont présentés dans le tableau 2 ci-dessous et à la figure 2.

**Tableau 2 : fractions de copolymère non-fondu à la température considérée**

| Température (°C) | Fraction de polymère non-fondue (% en poids) | | | | |
|---|---|---|---|---|---|
| | EMA1 | EMA2 | EMA3 | EMA4 | EMA5 |
| 103 | 0 | 8.7 | 0.8 | 0 | 5.8 |
| 83 | 4.9 | 41.3 | 31.7 | 18.8 | 36.5 |
| Répartition des comonomères | Homogène | Fortement hétérogène | Faiblement hétérogène | Faiblement hétérogène | Fortement hétérogène |

Les résultats obtenus montrent que les copolymères utiles dans le cadre de la présente invention (EMA2, EMA5) présentent une fraction infondue à 103°C et 83°C supérieure pour les grades « tubulaires » fortement hétérogènes comparativement à leur équivalent obtenu en procédé « tubulaire » faiblement hétérogène (EMA3 et EMA4). Comme attendu, les résultats font apparaître une fraction infondue à 103°C et 83°C systématiquement supérieure pour les grades « tubulaires » par rapport à leur équivalent « autoclaves » (EMA1).

### 2.2. Comparaison de la résistance aux hydrocarbures des enrobés BBSG 0/10 préparés à partir de liants bitumineux modifiés par des polymères (copolymère d'éthylène et d'acrylate de méthyle ou polymères de référence)

Des enrobés routiers ont été préparés à partir de différents liants bitumineux préparés à partir des copolymères d'éthylène et d'acrylate de méthyle présentés au tableau 1. Les enrobés routiers préparés présentant les compositions décrites dans le tableau 3. Les enrobés ont été fabriqués dans un malaxeur à une température comprise entre 140 et 180°C selon le liant bitumineux par mélange de 5.4 % en poids d'un liant bitumineux et 94.6 % en poids d'une fraction minérale dont les compositions sont présentées dans le tableau 3.

INV1 désigne un enrobé routier préparé en accordance avec la présente invention.

COMP1 désigne un enrobé routier préparé avec un liant bitumineux comprenant un additif de référence : Evatane^{®} 20-20 (EVA - copolymères d'éthylène et d'acétate de vinyle).

COMP2 désigne un enrobé routier préparé avec un liant bitumineux comprenant un copolymère d'éthylène et d'acrylate de méthyle différent des copolymères d'éthylène et d'acrylate de méthyle utiles dans le cadre la présente invention.

**Tableau 3: Compositions des enrobés BBSG 0/10. (¹ exprimé par rapport au poids total du liant bitumineux ; ² exprimé par rapport au poids total du mélange comprenant le liant bitumineux et la fraction minérale)**

| | INV1 | COMP1 | COMP2 |
|---|---|---|---|
| Liant bitumineux % en poids¹ | Bitume 70/100 | Bitume 70/100 | Bitume 70/100 |
| | 93 | 93 | 93 |
| | EMA 2 | EVA | EMA 1 |
| | 7 | 7 | 7 |
| Fraction minérale % en poids² | 6/10 diorite | | |
| | 36,9 | | |
| | 4/6 diorite | | |
| | 8,5 | | |
| | 2/6 diorite | | |
| | 8,5 | | |
| | 0/2 diorite | | |
| | 36 | | |
| | Filler (calcaire ou siliceux) | | |
| | 4,7 | | |

Les propriétés de résistance aux carburants des enrobés INV1, COMP1 et COMP2 ont été déterminées selon la méthode décrite dans la norme NF EN 12697-43 (2014). Les résultats obtenus après une durée d'immersion de 24 heures sont présentés dans le tableau 4.

Le comportement de l'enrobé vis-à-vis du solvant du bitume sera d'autant plus satisfaisant que les coefficients déterminés seront faibles.

**Tableau 4: Détermination des coefficients A , B et C des enrobés selon la méthode NF EN 12697-43.**

| | INV1 (EMA2) | COMP1 (EVA) | COMP2 (EMA1) |
|---|---|---|---|
| Perte de masse à l'immersion (%) « Coefficient A » | 0,3 | 0,5 | 1 |
| Perte de masse au brossage (%) « Coefficient B » | 2,7 | 11,8 | 5,4 |
| Perte de masse à l'immersion + brossage (%) « Coefficient C » | 2,9 | 12,6 | 6,4 |

Les résultats de résistance aux carburants (solvant pétrolier) des enrobés selon la méthode NF EN 12697-43 ont montré une meilleure résistance des enrobés selon la présente invention (INV1 ) par rapport aux enrobés préparés avec un liant bitumineux de référence (COMP1).

Les résultats ont également montré une meilleure résistance des enrobés préparés avec des copolymères d'éthylène et d'acrylate de méthyle de type « tubulaire » (INV1) par rapport à un même copolymère d'éthylène et d'acrylate de méthyle de type « Autoclave » (COMP2).

### 2.3. Comparaison de la résistance aux hydrocarbures des enrobés BBSG 0/10 préparés à partir de liants bitumineux comprenant un copolymère d'éthylène et d'acrylate de méthyle fortement hétérogène (EMA2 et EMA 5) ou un copolymère d'éthylène et d'acrylate de méthyle faiblement hétérogène (EMA3)

Des enrobés routiers ont été préparés à partir de différents liants bitumineux préparés à partir des copolymères d'éthylène et d'acrylate de méthyle EMA2, EMA3 et EMA5 présentés au tableau 1. Les enrobés routiers préparés présentant les compositions décrites dans le tableau 5.

INV1 et INV2 désignent des enrobés routiers préparés en accordance avec la présente invention.

COMP3 désigne un enrobé routier préparé avec un liant bitumineux comprenant un copolymère d'éthylène et d'acrylate de méthyle différent des copolymères d'éthylène et d'acrylate de méthyle utiles dans le cadre la présente invention.

Les enrobés ont été fabriqués dans un malaxeur à une température comprise entre 140 et 180°C selon le liant bitumineux par mélange de 5.4 % en poids d'un liant bitumineux et 94,6% en poids d'une fraction minérale dont les compositions sont présentées dans le tableau 5.

**Tableau 5 : Compositions des enrobés BBSG 0/10 (¹ exprimé par rapport au poids total du liant bitumineux ; ² exprimé par rapport au poids total du mélange comprenant le liant bitumineux et la fraction minérale)**

| | INV1 | INV2 | COMP3 |
|---|---|---|---|
| Liant bitumineux *% en poids¹* | Bitume 70/100 | Bitume 70/100 | Bitume 70/100 |
| | 93 | 93 | 93 |
| | EMA 2 | EMA5 | *EMA 3* |
| | *7* | *7* | *7* |
| Fraction minérale *% en poids²* | 6/10 silico-calcaire | | |
| | *46,3* | | |
| | 2/6 silico-calcaire | | |
| | *7,6* | | |
| | 0/2 silico-calcaire | | |
| | *36* | | |
| | Filler (calcaire ou siliceux) | | |
| | *4,7* | | |

Les propriétés de résistance aux carburants des enrobés INV1, INV2 et COMP3 ont été déterminées selon la méthode NF EN 12697-43 (2014). Les résultats obtenus après une durée d'immersion de 24 heures sont présentés dans le tableau 6.

**Tableau 6 : Détermination des coefficients A , B et C des enrobés selon la méthode NF EN 12697-43.**

| | INV1 (EMA2) | INV2 (EMA5) | COMP3 (EMA3) |
|---|---|---|---|
| "Perte de masse à l'immersion (%) Coefficient A" | 0,3 | 0,4 | 0,3 |
| "Perte de masse au brossage (%) Coefficient B" | 7,5 | 4,2 | 11,6 |
| "Perte de masse à l'immersion + brossage (%) Coefficient C" | 7,8 | 4,7 | 11,9 |

Les résultats de résistance au carburant (solvant pétrolier) des enrobés selon la méthode décrite dans la norme NF EN 12697-43 ont montré une meilleure résistance des enrobés préparés avec des liants comprenant un copolymère d'éthylène et d'acrylate de méthyle de type « tubulaire fortement hétérogène » (INV1 ET INV2) par rapport au même copolymère d'éthylène et d'acrylate de méthyle de type « tubulaire faiblement hétérogène » (COMP3).

## Revendications

1. Utilisation d'un copolymère d'éthylène et d'acrylate d'alkyle comprenant au moins 30% en poids de fraction non-fondue à 83°C et au moins 3% en poids de fraction non fondue à 103°C tels que mesurés par calorimétrie différentielle à balayage par succession de cycles de nucléation-recuit (DSC SSA) pour augmenter la résistance des liants bitumineux aux agressions chimiques, de préférence aux agressions par les hydrocarbures.

2. Utilisation d'un copolymère d'éthylène et d'acrylate d'alkyle selon la revendication 1 dans lequel le copolymère d'éthylène et d'acrylate d'alkyle comprend de 1 à 40% en poids, préférablement de 15 à 35% en poids, encore plus préférablement de 19 à 30% en poids d'acrylate d'alkyle par rapport au poids total du copolymère.

3. Utilisation d'un copolymère d'éthylène et d'acrylate d'alkyle selon la revendication 1 ou 2 dans lequel le copolymère d'éthylène et d'acrylate d'alkyle est un copolymère d'éthylène et d'acrylate de méthyle, un copolymère d'éthylène et d'acrylate d'éthyle, un copolymère d'éthylène et d'acrylate de butyle ou leurs mélanges, de préférence un copolymère d'éthylène et d'acrylate de méthyle.

4. Utilisation d'un copolymère d'éthylène et d'acrylate d'alkyle selon l'une des revendications précédentes dans lequel le copolymère d'éthylène et d'acrylate d'alkyle comprend au moins 32% en poids de fraction non-fondue à 83°C et au moins 3% en poids de fraction non fondue à 103°C tels que mesurés par calorimétrie différentielle à balayage par succession de cycles de nucléation-recuit.

5. Utilisation d'un copolymère d'éthylène et d'acrylate d'alkyle selon l'une des revendications précédentes dans lequel le copolymère d'éthylène et d'acrylate d'alkyle comprend au moins 35% en poids de fraction non-fondue à 83°C et au moins 5% en poids de fraction non fondue à 103°C tels que mesurés par calorimétrie différentielle à balayage par succession de cycles de nucléation-recuit.

6. Liant bitumineux comprenant du bitume et au moins un copolymère d'éthylène et d'acrylate d'alkyle comprenant au moins 30% en poids de fraction non-fondue à 83°C et au moins 3% en poids de fraction non fondue à 103°C tels que mesurés par calorimétrie différentielle à balayage par succession de cycles de nucléation-recuit.

7. Le liant bitumineux selon la revendication 6 dans lequel le copolymère d'éthylène et d'acrylate d'alkyle comprend de 1 à 40% en poids, préférablement de 15 à 35% en poids, encore plus préférablement de 19 à 30% en poids d'acrylate d'alkyle par rapport au poids total du copolymère.

8. Le liant bitumineux selon la revendication 6 ou 7 dans lequel le copolymère d'éthylène et d'acrylate d'alkyle est un copolymère d'éthylène et d'acrylate de méthyle, un copolymère d'éthylène et d'acrylate d'éthyle, un copolymère d'éthylène et d'acrylate de butyle ou leurs mélanges, de préférence un copolymère d'éthylène et d'acrylate de méthyle.

9. Le liant bitumineux selon l'une des revendications 6 à 8 comprenant au moins 3% en poids, de préférence au moins 5% en poids, plus préférentiellement de 3 à 10% en poids d'un copolymère d'éthylène et d'acrylate d'alkyle ou de leurs mélanges par rapport au poids total du liant bitumineux.

10. Le liant bitumineux selon l'une des revendications 6 à 9 dans lequel le copolymère d'éthylène et d'acrylate d'alkyle comprend au moins 32% en poids de fraction non-fondue à 83°C et au moins 3% en poids de fraction non fondue à 103°C tels que mesurés par calorimétrie différentielle à balayage par succession de cycles de nucléation-recuit.

11. Le liant bitumineux selon l'une des revendications 6 à 9 dans lequel le copolymère d'éthylène et d'acrylate d'alkyle comprend au moins 35% en poids de fraction non-fondue à 83°C et au moins 5% en poids de fraction non fondue à 103°C tels que mesurés par calorimétrie différentielle à balayage par succession de cycles de nucléation-recuit.

12. Utilisation d'un liant bitumineux selon l'une des revendications 6 à 11 pour augmenter la résistance des produits bitumineux préparés à partir du liant bitumineux aux agressions chimiques, de préférence aux agressions par les hydrocarbures.

13. Produit bitumineux comprenant un liant bitumineux selon l'une des revendications 6 à 11 et éventuellement des particules solides.

14. Le produit bitumineux selon la revendication 13 dans lequel le produit bitumineux est un asphalte coulé, un enrobé à chaud, un enrobé tiède, une membrane bitumineuse, un matériau bitumineux coulé à froid ou un enduit superficiel.

15. Procédé de fabrication d'un produit bitumineux comprenant un liant bitumineux selon l'une des revendications 6 à 11 et des particules solides, ledit procédé comprenant les étapes suivantes :
(a) chauffage des particules solides, de préférence à une température supérieure à 100°C ;
(b) mise en contact et mélange des particules solides chauffées et du liant bitumineux.

## Patentansprüche

1. Verwendung eines Ethylen-Alkylacrylat-Copolymers mit mindestens 30 Gew.-% ungeschmolzener Fraktion bei 83°C und mindestens 3 Gew.-% ungeschmolzener Fraktion bei 103°C, gemessen durch Differential-Scanning-Kalorimetrie gemäß einer Abfolge von Keimbildungs- und Temperzyklen (DSC SSA) zur Erhöhung der Beständigkeit von bituminösen Bindemitteln gegenüber chemischen Angriffen, vorzugsweise gegenüber Angriffen durch Kohlenwasserstoffe.

2. Verwendung eines Ethylen-Alkylacrylat-Copolymers nach Anspruch 1, wobei das Ethylen-Alkylacrylat-Copolymer 1 bis 40 Gew.-%, vorzugsweise 15 bis 35 Gew.-%, noch bevorzugter 19 bis 30 Gew.-% Alkylacrylat, bezogen auf das Gesamtgewicht des Copolymers, umfasst.

3. Verwendung eines Ethylen-Alkylacrylat-Copolymers nach Anspruch 1 oder 2, wobei das Ethylen-Alkylacrylat-Copolymer ein Ethylen-Methylacrylat-Copolymer, ein Ethylen-Ethylacrylat-Copolymer, ein Ethylen-Butylacrylat-Copolmyer oder deren Gemische, vorzugsweise ein Ethylen-Methylacrylat-Copolymer ist.

4. Verwendung eines Ethylen-Alkylacrylat-Copolymers nach einem der vorstehenden Ansprüche, wobei das Ethylen-Alkylacrylat-Copolymer mindestens 32 Gew.-% ungeschmolzene Fraktion bei 83°C und mindestens 3 Gew.-% ungeschmolzene Fraktion bei 103°C, gemessen durch Differential-Scanning-Kalorimetrie gemäß einer Abfolge von Keimbildungs- und Temperierzyklen, umfasst.

5. Verwendung eines Ethylen-Alkylacrylat-Copolymers nach einem der vorstehenden Ansprüche, wobei das Ethylen-Alkylacrylat-Copolymer mindestens 35 Gew.-% ungeschmolzene Fraktion bei 83°C und mindestens 5 Gew.-% ungeschmolzene Fraktion bei 103°C, gemessen durch Differential-Scanning-Kalorimetrie gemäß einer Abfolge von Keimbildungs- und Temperierzyklen, umfasst.

6. Bituminöses Bindemittel, umfassend Bitumen und mindestens ein Ethylen-Alkylacrylat-Copolymer, das mindestens 30 Gew.-% ungeschmolzene Fraktion bei 83°C und mindestens 3 Gew.-% ungeschmolzene Fraktion bei 103°C, gemessen durch Differential-Scanning-Kalorimetrie gemäß einer Abfolge von Keimbildungs- und Temperierzyklen, umfasst.

7. Das bituminöse Bindemittel nach Anspruch 6, wobei das Ethylen-Alkylacrylat-Copolymer 1 bis 40 Gew.-%, vorzugsweise 15 bis 35 Gew.-%, noch bevorzugter 19 bis 30 Gew.-% Alkylacrylat, bezogen auf das Gesamtgewicht des Copolymers, umfasst.

8. Das bituminöse Bindemittel nach Anspruch 6 oder 7, wobei das Ethylen-Alkylacrylat-Copolymer ein Ethylen-Methylacrylat-Copolymer, ein Ethylen-Ethylacrylat-Copolymer, ein Ethylen-Butylacrylat-Copolymer oder deren Gemische, vorzugsweise ein Ethylen-Methylacrylat-Copolymer, ist.

9. Das bituminöse Bindemittel nach einem der Ansprüche 6 bis 8, das mindestens 3 Gew.-%, vorzugsweise mindestens 5 Gew.-%, noch bevorzugter 3 bis 10 Gew.-% eines Ethylen-Alkylacrylat-Copolymers oder deren Gemische, bezogen auf das Gesamtgewicht des bituminösen Bindemittels, umfasst.

10. Das bituminöse Bindemittel nach einem der Ansprüche 6 bis 9, wobei das Ethylen-Alkylacrylat-Copolymer mindestens 32 Gew.-% ungeschmolzene Fraktion bei 83°C und mindestens 3 Gew.-% ungeschmolzene Fraktion bei 103°C, gemessen durch Differential-Scanning-Kalorimetrie gemäß einer Abfolge von Keimbildungs- und Temperzyklen, umfasst.

11. Das bituminöse Bindemittel nach einem der Ansprüche 6 bis 9, wobei das Ethylen-Alkylacrylat-Copolymer mindestens 35 Gew.-% ungeschmolzene Fraktion bei 83°C und mindestens 5 Gew.-% ungeschmolzene Fraktion bei 103°C, gemessen durch Differential-Scanning-Kalorimetrie gemäß einer Abfolge von Keimbildungs- und Temperierzyklen, umfasst.

12. Verwendung eines bituminösen Bindemittels nach einem der Ansprüche 6 bis 11 zur Erhöhung der Beständigkeit von aus dem bituminösen Bindemittel hergestellten bituminösen Produkten gegenüber chemischen Angriffen, vorzugsweise gegenüber Angriffen durch Kohlenwasserstoffe.

13. Bituminöses Produkt, das ein bituminöses Bindemittel nach einem der Ansprüche 6 bis 11 und gegebenenfalls feste Partikel enthält.

14. Das bituminöse Produkt nach Anspruch 13, wobei das bituminöse Produkt ein Gussasphalt, ein Heißasphalt, ein Warmasphalt, eine Bitumenmembran, ein kaltgegossenes bituminöses Material oder eine Oberflächenbeschichtung ist.

15. Verfahren zur Herstellung eines bituminösen Produkts, das ein bituminöses Bindemittel nach einem der Ansprüche 6 bis 11 und feste Partikel umfasst, wobei das Verfahren die folgenden Schritte umfasst:
(a) Erhitzen der festen Partikel, vorzugsweise auf eine Temperatur von über 100°C;
(b) Inkontaktbringen und Mischen der erhitzten festen Partikel und des bituminösen Bindemittels.

## Claims

1. Use of an ethylene-alkyl acrylate copolymer comprising at least 30% by weight of non-melted fraction at 83°C and at least 3% by weight of non-melted fraction at 103°C as measured by differential scanning calorimetry by succession of nucleation-annealing cycles (DSC SSA) for increasing the resistance of bituminous binders to chemical attack, preferably to attack by hydrocarbons.

2. Use of an ethylene-alkyl acrylate copolymer according to claim 1, in which the ethylene-alkyl acrylate copolymer comprises from 1 to 40% by weight, preferably from 15 to 35% by weight, still more preferably from 19 to 30% by weight of alkyl acrylate relative to the total weight of the copolymer.

3. Use of an ethylene-alkyl acrylate copolymer according to claim 1 or 2, in which the ethylene-alkyl acrylate copolymer is an ethylene-methyl acrylate copolymer, an ethylene-ethyl acrylate copolymer, an ethylene-butyl acrylate copolymer or mixtures thereof, preferably an ethylene-methyl acrylate copolymer.

4. Use of an ethylene-alkyl acrylate copolymer according to one of the preceding claims, in which the ethylene-alkyl acrylate copolymer comprises at least 32% by weight of non-melted fraction at 83°C and at least 3% by weight of non-melted fraction at 103°C, as measured by differential scanning calorimetry using a succession of nucleation-annealing cycles.

5. Use of an ethylene-alkyl acrylate copolymer according to one of the preceding claims, in which the ethylene-alkyl acrylate copolymer comprises at least 35% by weight of non-melted fraction at 83°C and at least 5% by weight of non-melted fraction at 103°C, as measured by differential scanning calorimetry using a succession of nucleation-annealing cycles.

6. Bituminous binder comprising bitumen and at least one ethylene-alkyl acrylate copolymer comprising at least 30% by weight of non-molten fraction at 83°C and at least 3% by weight of non-molten fraction at 103°C as measured by differential scanning calorimetry by a succession of nucleation-annealing cycles.

7. The bituminous binder according to claim 6, in which the ethylene-alkyl acrylate copolymer comprises from 1 to 40% by weight, preferably from 15 to 35% by weight, still more preferably from 19 to 30% by weight of alkyl acrylate relative to the total weight of the copolymer.

8. The bituminous binder according to claim 6 or 7, wherein the ethylene-alkyl acrylate copolymer is an ethylene-methyl acrylate copolymer, an ethylene-ethyl acrylate copolymer, an ethylene-butyl acrylate copolymer or mixtures thereof, preferably ethylene-methyl acrylate copolymer.

9. The bituminous binder according to one of claims 6 to 8, comprising at least 3% by weight, preferably at least 5% by weight, more preferably from 3 to 10% by weight of an ethylene-alkyl acrylate copolymer or mixtures thereof relative to the total weight of the bituminous binder.

10. The bituminous binder according to one of claims 6 to 9, in which the ethylene-alkyl acrylate copolymer comprises at least 32% by weight of unmelted fraction at 83°C and at least 3% by weight of unmelted fraction at 103°C as measured by differential scanning calorimetry by a succession of nucleation-annealing cycles.

11. The bituminous binder according to one of claims 6 to 9, in which the ethylene-alkyl acrylate copolymer comprises at least 35% by weight of unmelted fraction at 83°C and at least 5% by weight of unmelted fraction at 103°C as measured by differential scanning calorimetry by a succession of nucleation-annealing cycles.

12. Use of a bituminous binder according to one of claims 6 to 11, to increase the resistance of bituminous products prepared from the bituminous binder to chemical attack, preferably attack by hydrocarbons.

13. Bituminous product comprising a bituminous binder according to one of claims 6 to 11 and optionally solid particles.

14. The bituminous product of claim 13, wherein the bituminous product is a mastic asphalt, hot mix asphalt, warm mix asphalt, bituminous membrane, cold cast bituminous material or surface dressing.

15. A method of making a bituminous product comprising a bituminous binder according to any one of claims 6 to 11 and solid particles, said method comprising the following steps:
(a) heating the solid particles, preferably to a temperature above 100°C ;
(b) contacting and mixing the heated solid particles with the bituminous binder.
